# EUROPÄISCHE PATENTANMELDUNG

(11) **EP 1 762 413 A2**
(43) Veröffentlichungstag der Anmeldung: **14.03.2007**
(21) Anmeldenummer: 06017711.0
(22) Anmeldetag: 25.08.2006
(51) Int. Cl.: B60J 7/14

(54) **Dachkonzept für ein Fahrzeug mit offenem Aufbau**

(30) Priorität: 12.09.2005 DE 102005043509
(71) Anmelder: Magna Car Top Systems GmbH, 74321 Bietigheim-Bissingen (DE)
(72) Erfinder: Hesse, Jan, 74321 Bietigheim-Bissingen (DE); Papendorf, Marcus, Dipl.-Ing. (BA), 74354 Besigheim (DE)

(57) **Zusammenfassung**

Ein Dachkonzept für ein Steilheckfahrzeug mit offenem Aufbau sieht ein mehrstufiges zu öffnendes Dach vor, dessen miteinander über Lenkerkinematiken verbundene und gegeneinander verstellbare Dachteile über eine einem Dachteil zugeordnete Lenkerkinematik auf einer Tragbasis abgestützt sind, wobei ein gemeinsamer Stellantrieb für die Verstellung der Dachteile zueinander und gegenüber der Tragbasis vorgesehen ist und dieser gemeinsame Stellantrieb zwischen einer der Lenkerkinematiken und einer dachseitigen Abstützung vorgesehen ist.

## Beschreibung

Die Erfindung betrifft ein Dachkonzept für ein Fahrzeug mit offenem Aufbau gemäß dem Oberbegriff des Anspruches 1.

Fahrzeuge der vorgenannten Art sind aus der US 2,704,225 bekannt, die ein vierteiliges zu öffnendes Dach zeigt, bei dem die bei geschlossenem Dach aneinander anschließenden, zwiebelschalenförmig gekrümmten Dachteile zum Öffnen des Daches nach hinten zusammengefahren und als Paket im Kofferraumbereich des Fahrzeuges abgelegt werden. Im Dachteilpaket liegen die Dachteile, bei gleich bleibender Reihenfolge, geschichtet über dem hintersten Dachteil, so dass das vorderste Dachteil im Dachteilpaket oben liegt. Getragen und antriebsverbunden sind die Dachteile untereinander über Viergelenkkinematiken, und das hinterste Dachteil ist über eine weitere Viergelenkkinematik gegen die Karosserie als feststehende Basis abgestützt, wobei ausgehend von dem Antriebslenker der das hintere Dachteil mit dem davor liegenden Dachteil verbindenden Viergelenkkinematik die zwischen den Dachteilen liegenden Viergelenkkinematiken jeweils über Koppellenker verbunden und angetrieben sind. Der Antriebslenker der zwischen dem hintersten und dem davor liegenden Dachteil vorgesehenen Viergelenkkinematik ist hierzu als zweiarmiger Hebel ausgebildet, dessen einer Arm zur Tragbasis angelenkt ist und dessen anderer, jenseits der Anlenkung des Antriebslenkers zum hintersten Dachteil liegender Antriebsarm mit einer Koppel verbunden ist, die das hintere Dachteil mit dem vor diesem liegenden Dachteil verbindet. Der Antriebslenker der dem hintersten Dachteil zugeordneten Viergelenkanordnung ist von dem durch einen Stellzylinder gebildeten Stellantrieb beaufschlagt, der gegen die Tragbasis abgestützt ist. Somit erfolgt sowohl die tragende und führende Abstützung wie auch die Abstützung des Antriebs für das gesamte Dach gegen die Tragbasis.

Aus der US 2,812,975 ist ein weiteres Konzept für ein Dach eines öffnungsfähigen Fahrzeuges bekannt. Das Dach besteht aus drei Dachteilen, die sämtlich zwiebelschalenförmig geformt sind und die insgesamt durch Verschwenken des hinteren Dachteiles um eine fahrzeugfeste Querachse aus ihrer sich in Fahrtrichtung erstreckenden Schließlage in eine aufgestellte Öffnungslage zu überführen sind. Dem hinteren Dachteil ist für diese Schwenkbewegung ein eigenständiger Stellantrieb zugeordnet. An das hintere Dachteil schließen die vorderen Dachteile an, und die Dachteile sind untereinander über Lenkerkinematiken mit jeweils einem eigenständigen Stellantrieb verbunden. In der durch Verschwenken des hinteren Dachteiles aufgestellten, aufrechten Lage des Daches werden die an das hintere Dachteil anschließenden Dachteile, entsprechend ihrer Reihenfolge im Anschluss an das hintere Dachteil, unter das hintere Dachteil eingeschwenkt, so dass sich in der Ablagestellung ein Dachteilpaket ergibt, bei dem das hintere und das vorderste Dachteil bei gleicher Bombierung aller Dachteile die äußeren Dachteile des Dachstapels bilden.

Ein bezogen auf die Ablageposition des Daches ähnliches Konzept zeigt die US 2, 623,779, bei der die Dachteile in Längsrichtung des Daches zueinander verschieblich über einen Teleskopzylinder verfahrbar sind und das hintere Dachteil zusammen mit dem Teleskopzylinder um eine liegende Querachse in die Ablagestellung für das Dach verschwenkbar ist, bei unter das hintere Dachteil eingeschobenen vorderen Dachteilen.

Der Erfindung liegt die Aufgabe zugrunde, ein Fahrzeug mit offenem Aufbau bezüglich seines Dachkonzeptes so auszugestalten, dass sich bei geschlossenem Dach ein sehr flacher Dachaufbau ergibt, der im Hinblick auf mehrteilige Dächer mit in der Schließlage im Wesentlichen planer Dachebene insbesondere für Fahrzeuge von Bedeutung ist, die als Steilheckfahrzeuge einen nach hinten offenen und an einen heckseitigen Ausschnitt angrenzenden Dachausschnitt aufweisen und die durch Freilegen des Dachausschnittes als Fahrzeuge offenen Aufbaus zu nutzen sind.

Erreichbar ist dies mit einem Dachkonzept gemäß dem Anspruch 1, bei dem die zur Ankupplung des Stellantriebs an die antriebsverbundenen Lenkerkinematiken gegenüberliegende Abstützung des Stellantriebes dachseitig vorgesehen ist, insbesondere an einem Dachteil vorgesehen ist. Dadurch lassen sich Stellantriebe, insbesondere in Form linearer Stellantriebe, wie Stellzylinder, zum Einsatz bringen, die sich im Wesentlichen längs eines Dachteiles erstrecken, und dies ungeachtet dessen, dass sowohl die Verstellung der Dachteile untereinander wie auch des gesamten Daches gegenüber der Tragbasis über diesen gemeinsamen Stellantrieb erfolgt. Zudem wird das Dach durch diese Ausgestaltung zu einer in sich geschlossenen Montageeinheit, bei der das Dach lediglich über eine einem Dachteil zugeordnete Lenkerkinematik mit der Tragbasis verbunden werden muss, wobei diese Tragbasis lagefest oder auch lageverstellbar sein kann, beispielsweise in Form einer Verstellkonsole oder eines Rotationslenkers, was zusätzliche Möglichkeiten hinsichtlich der Überführung des Daches in gewünschte Ablagestellungen ermöglicht.

Die Lenkerkinematiken lassen sich im Rahmen der Erfindung bevorzugt als Viergelenkkinematiken ausgestalten, so dass sich auch ein einfacher Aufbau ergibt, der günstige Möglichkeiten zur Verstellung der Dachteile zueinander im Sinne einer Paketbildung mit übereinander geschichteten Dachteilen ermöglicht, und dies gegebenenfalls auch mit Paketbildungen in unterschiedlichen Höhenlagen durch die zur Tragbasis vorgesehene Viergelenkkinematik.

Im Hinblick auf eine sehr enge Schichtung der Dachteile übereinander bei gleich bleibender Ausrichtung der Dachteile zueinander erweist es sich als zweckmäßig, in der Antriebsübertragung zwischen aufeinander folgenden Dachteilen zugeordneten Lenkerkinematiken eine Fünfgelenkkinematik vorzusehen, über die sich Schwenkwege im Bereich von 180° und damit eine nahezu unmittelbare Positionierung übereinander eingeschwenkter Dachteile aufeinander erreichen lässt.

Weitere Einzelheiten und Merkmale der Erfindung ergeben sich aus den Ansprüchen. Ferner wird die Erfindung nachstehend anhand eines Ausführungsbeispieles erläutert. Es zeigen:

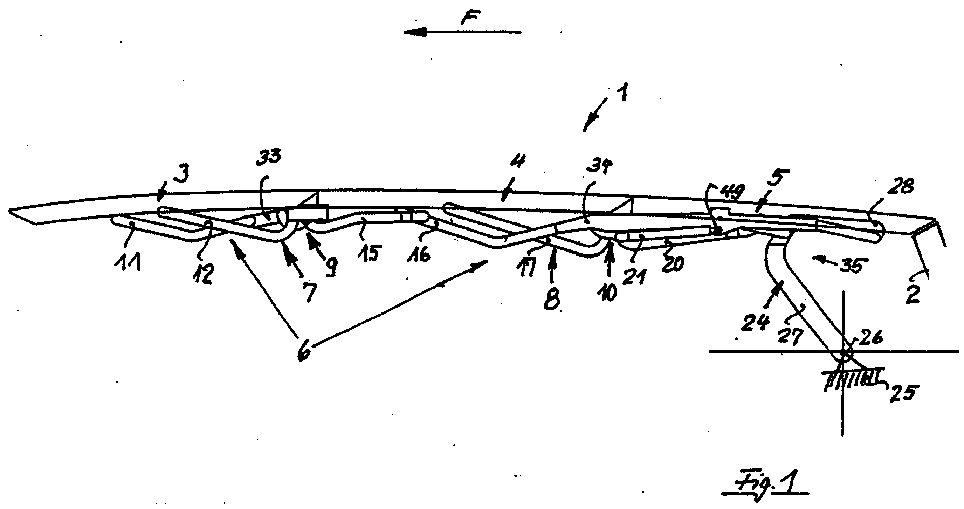

- Fig. 1: bezogen auf ein Fahrzeug offenen Aufbaus, in isolierter Darstellung, dessen Dachkonzept mit dreiteiligem, in seiner Schließstellung eine im Wesentlichen plane Dachebene aufweisenden Daches, wobei dessen aufeinander folgende Dachteile jeweils über Lenkerkinematiken zueinander verstellbar aufeinander abgestützt sind und von diesen Dachteilen lediglich das hintere Dachteil über eine Lenkerkinematik gegen eine Tragbasis abgestützt ist, und wobei als Tragbasis eine Rotationslenkeranordnung vorgesehen ist, die zur nicht weiter dargestellten Karosserie des Fahrzeuges verstellbar ist, welche einen das Dach in seiner Schließstellung aufnehmenden Ausschnitt aufweist,

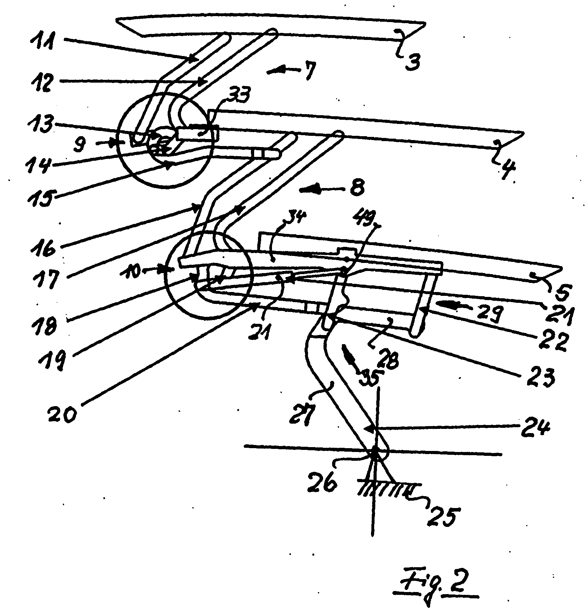

- Fig. 2: das Dach gemäß Fig. 1 in einer Zwischenstellung bei der Überführung aus einer geschlossenen Stellung gemäß Fig. 1 in eine Offenstellung, wobei die Abstützung der Dachteile untereinander und des hinteren Dachteiles gegen die Rotationslenkeranordnung über Lenkerkinematiken in Form von Viergelenkkinematiken gezeigt ist,

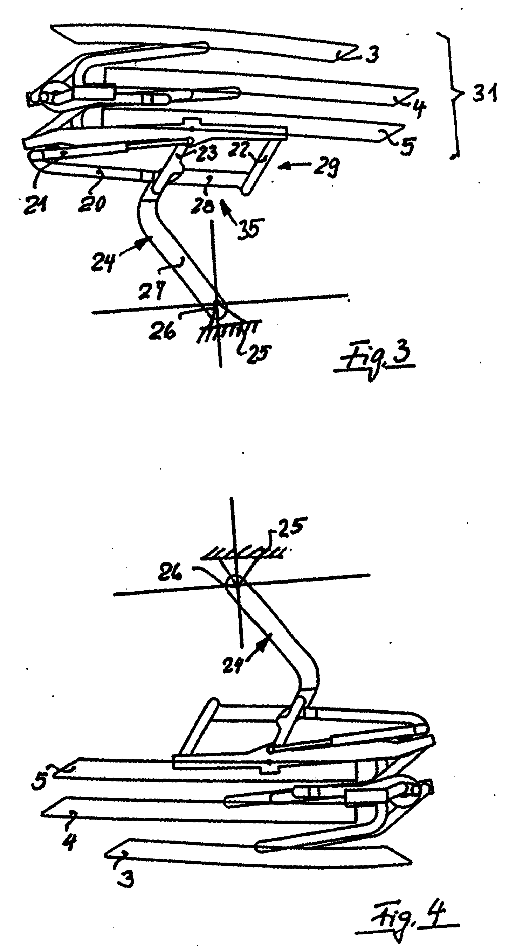

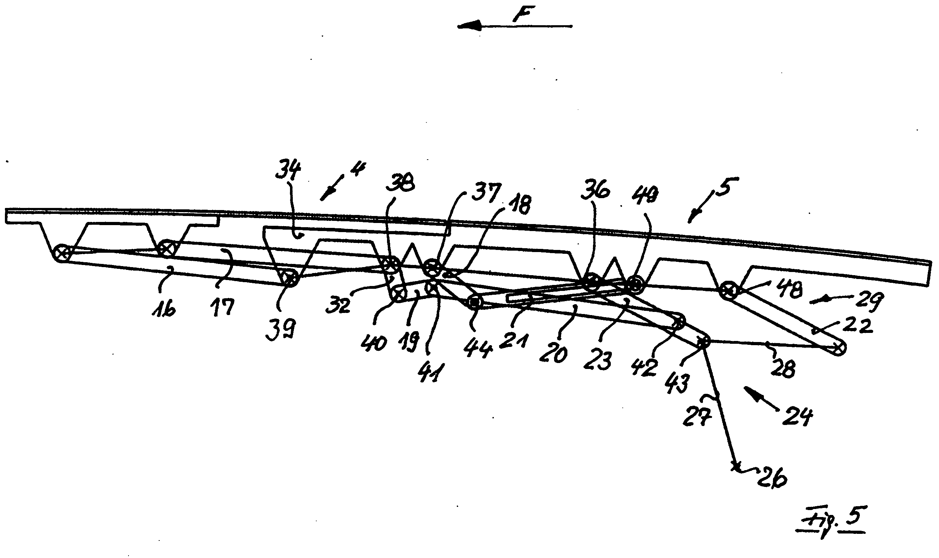

- Fig. 3: das Dach gemäß Fig. 1 und 2 in einer Übergangsstellung zu einer Ablagestellung gemäß Fig. 4, wobei in der in Fig. 3 gezeigten Übergangsstellung die Dachteile zu einem auf Dachhöhe liegenden Dachteilpaket zusammengefahren sind,
- Fig. 4: das Dach in seiner Ablagestellung nach Verschwenken des Dachteilpaketes in eine Überkopflage, und

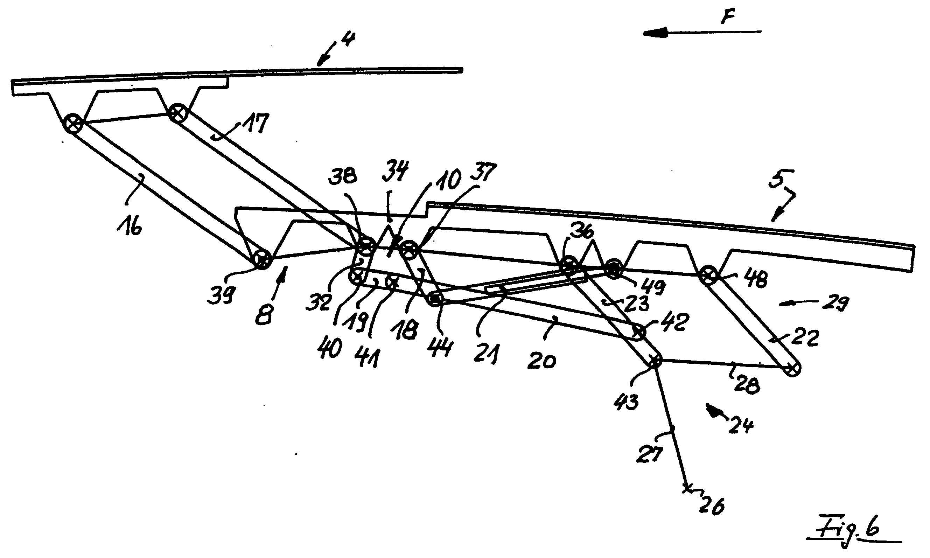

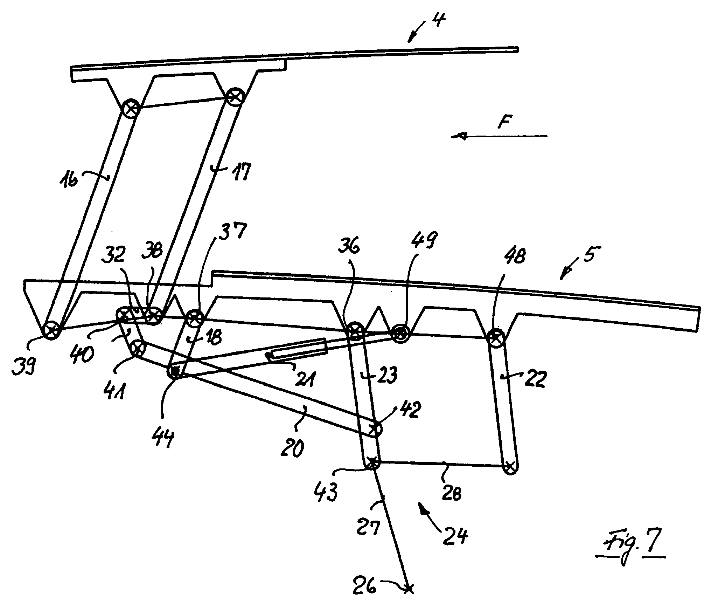

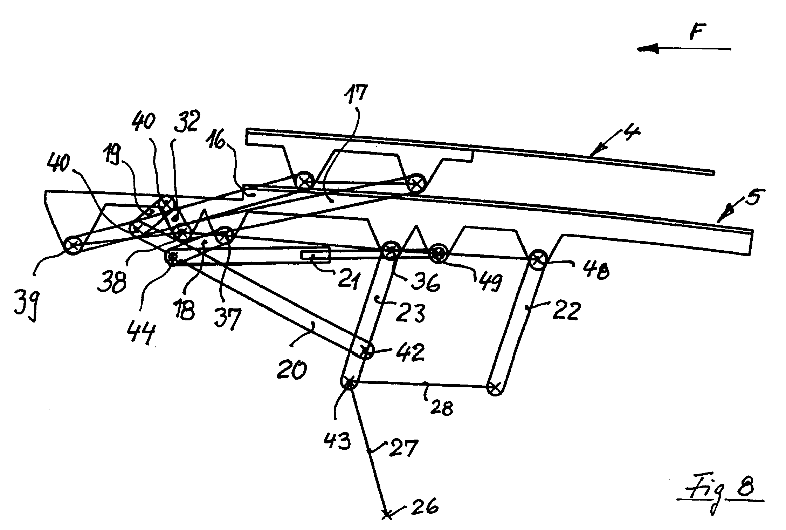

- Fig. 6 bis 8: schematisierte Darstellungen des Daches gemäß Fig. 1 bis 4 bei Erläuterung des Dachkonzeptes anhand der Darstellung lediglich zweier Dachteile, deren eines als hinteres Dachteil mit der Tragbasis verbunden ist, wiederum ausgehend von einer Darstellung des Daches bei geschlossenem Dach (Fig. 5) über Übergangsstellungen zur Darstellung des Daches als zusammengefahrenes Dachteilpaket (Fig. 8).

In den Figuren ist ein in Annäherung planes Dach 1 eines Fahrzeuges mit offenem Aufbau gezeigt, das als Steilheckfahrzeug einen gegen das Heck offenen Dachausschnitt aufweist, zu dem ein heckseitiger, über eine Heckklappe oder eine Hecktür verschließbarer Karosserieausschnitt korrespondiert. Die Heckklappe, oder Hecktür, in Fig. 1 mit 2 bezeichnet und lediglich angedeutet, schließt rückseitig an das Dach 1 an, das als mehrteiliges Dach 1 im Ausführungsbeispiel formsteife Dachteile 3 bis 5 aufweist, die in der Schließlage des Daches (Fig. 1) aneinander anschließen und die in eine Öffnungslage verstellbar sind (Fig. 3), in der sie geschichtet übereinander liegen. Ungeachtet der Beschreibung und Erläuterung als Dach 1 mit drei Dachteilen 3 bis 5 kann ein Dach in erfindungsgemäßer Ausgestaltung auch lediglich zwei oder mehr als drei Dachteile aufweisen.

Bezogen auf die Darstellung gemäß Fig. 1 mit drei Dachteilen bildet das Dachteil 5 ein hinteres Dachteil und diesem vorgelagert sowie an dieses anschließend ist als Dachteil 4 ein vorderes und, zu diesem wiederum vorgelagert, ein vorderstes Dachteil 3 vorgesehen, wobei nachfolgend in Beschreibung des dreiteiligen Daches 1 gemäß Fig. 1 von einem hinteren Dachteil 5, von einem an dieses anschließenden vorderen Dachteil als mittlerem Dachteil 4 und einem davor liegenden vordersten Dachteil 3 gesprochen wird.

In der zusammengefahrenen Lage als Dachteilpaket 31 (Fig. 3) liegt das mittlere Dachteil 4 über dem hinteren Dachteil 5 und das vorderste Dachteil 3 über dem mittleren Dachteil 5. Untereinander sind die Dachteile 3 bis 5 über Lenkeranordnungen 6 grundsätzlich gleichen Aufbaus verbunden, umfassend jeweils eine Lenkerkinematik 7 bzw. 8. in Form einer Viergelenkkinematik sowie eine Fünfgelenkkinematik 9 bzw. 10, die es ermöglicht, bei geschlossenem Dach 1 die in Strecklage aneinander anschließenden Dachteile 3 bis 5 bei günstigen Übersetzungenverhältnissen und damit geringem Stellkraftaufwand in eine jeweilige Öffnungslage zu überführen, in der diese als Dachteilpaket 31 übereinander geschichtet sind, wobei in dieser Paketstellung zwischen den Dachteilen 3 bis 5 lediglich ein geringer Abstand gegeben ist, so dass sich eine dichte Packlage ungeachtet einer in Längsrichtung weitgehend vollständigen Überdeckung ergibt.

Fig. 2 zeigt, dass die Lenkerkinematik 7 einen Steuerlenker 11 und einen Hauptlenker 12 umfasst, und dass in entsprechender Weise die Lenkerkinematik 8 mit einem Steuerlenker 16 und einem Hauptlenker 17 aufgebaut ist. Im Antrieb der jeweiligen Lenkerkinematik 7 bzw. 8 liegt jeweils die Fünfgelenkkinematik 9 bzw. 10, wobei der Antrieb auf den jeweiligen Hauptlenker 12 bzw. 17 erfolgt. Bezogen auf die Lenkerkinematik 7 zwischen dem vordersten Dachteil 3 und dem mittleren Dachteil 4 erfolgt der Antrieb über eine Koppel 15, der ausgehend von der Anlenkung zum Steuerlenker 16 der Lenkeranordnung 8 über die Fünfgelenkkinematik 9 mit dem Hauptlenker 12 verbunden ist, wobei die Fünfgelenkinematik 9 einen Pendellenker 13 und einen Zwischenlenker 14 aufweist.

Bezogen auf die Fahrtrichtung F liegt bei geschlossenem Dach der Zwischenlenker 14 im Wesentlichen vor dem Pendellenker 13, was die Fig. 1 bis 4 nur andeuten, und es ist der Pendellenker 13 einerseits zusammen mit dem Steuerlenker 11 und dem Hauptlenker 12 an einem zum mittleren Dachteil 4 nach vorne auskragenden Ausleger 33 angelenkt, und zum anderen an der Koppel 15. Der Zwischenlenker 14 hat zur Koppel 15 eine in Fahrtrichtung F zur Anlenkung des Pendellenkers 13 versetzte Anlenkung und es ist der Zwischenlenker 14 des Weiterem an einem Antriebsarm des Hauptlenkers 12 angelenkt, so dass der Antrieb für die Lenkerkinematik 7, wie dargelegt, über eine Fünfgelenkkinematik 9 läuft, wie sie anhand der Fig. 5 bis 8 für die Fünfgelenkkinematik 10 zwischen hinterem Dachteil 5 und mittlerem Dachteil 4 des Näheren dargestellt ist.

In zur Lenkerkinematik 7 entsprechender Weise ist die Lenkerkinematik 8 über eine Fünfgelenkkinematik 10 angetrieben, ausgehend von einer Koppel 20, an der, in analoger Weise wie bezüglich der Fünfgelenkkinematik 9 beschrieben, ein Pendellenker 18 und ein Zwischenlenker 19 angelenkt sind, von denen der Zwischenlenker 19 wiederum an einem Antriebsarm (in Fig. 5 bis 8 mit 32 bezeichnet) des Hauptlenkers 17 angreift, der über die Anlenkung des Hauptlenkers 17 zu dem dem hinteren Dachteil 5 zugeordneten Ausleger 34 hinausragt.

Das hintere Dachteil 5, das entsprechend der vorgeschilderten Anbindung der Dachteile 3 und 4 über die zugeordneten Lenkerkinematiken 7 und 8 diese Dachteile trägt, ist seinerseits über eine Rotationslenkeranordnung 24 als Tragbasis 35 mit der nur schematisch angedeuteten Karosserie 25 des Fahrzeuges verbunden, wobei die Rotationslenkeranordnung 24 zur Karosserie im Ausführungsbeispiel eine lagefeste Drehachse 26 aufweist. Bezogen auf seine Stellung gemäß Fig. 1 bis 3 - geschlossenes Dach (Fig. 1) und geöffnetes Dach (Fig. 3) - weist die winklig gestaltete Rotationslenkeranordnung 24 einen schräg nach vorne in Fahrtrichtung F ansteigenden Schenkel 27 sowie einen demgegenüber abgeknickt nach hinten verlaufenden Schenkel 28 auf, an dem die Lenkerkinematik 29 angelenkt ist, über die das hintere Dachteil 5 mit der Rotationslenkeranordnung 24 verbunden ist. Die Lenkerkinematik 29 ist wiederum als Viergelenkkinematik mit einem Hauptlenker 22 und einem Steuerlenker 23 ausgebildet, die jeweils Anlenkpunkte zum Schenkel 28 der Rotationslenkeranordnung 24 als Tragbasis und zum hinteren Dachteil 5 aufweisen, das in Fahrtrichtung F, also nach vorne, in einem Ausleger 34 ausläuft, an dem der Steuerlenker 16 und der Hauptlenker 17 der Lenkerkinematik 8 angelenkt sind, so dass durch Ein- und Ausfahren des als Stellantrieb vorgesehenen Stellzylinders 21 die Verstellung der Dachteile 3 bis 5 gegenüber der Rotationslenkeranordnung 24 als Tragbasis 35 erfolgt.

Die Dachteile 3 bis 5 sind mit den zwischen den Dachteilen 3 und 4 sowie 4 und 5 schematisch angedeuteten Lenkerkinematiken 7 und 8 in der zusammengefahrenen Stapellage in Fig. 3 und 4 gezeigt, wobei Fig. 3 das in der Endstellung der Öffnung des Daches nach hinten zusammengefahrene Dachteilpaket 31 zeigt, das über die Rotationslenkeranordnung 24 in eine Überkopflage nach unten verschwenkbar ist, die eine Ablagestellung bildet.

Um die Fünfgelenkkinematiken 9, 10 in ihrem Aufbau zu verdeutlichen, sind in den Fig. 5 bis 8 das hintere Dachteil 5 und das vordere Dachteil 4 mit der zugehörigen Rotationslenkeranordnung 24 nochmals isoliert dargestellt, und zwar in einer stark schematisierten Anordnung. Die Bezeichnungen für die einzelnen Teile sind beibehalten.

Verdeutlicht ist in den Fig. 5 bis 8 insbesondere die Lage der Anlenkungen der Lenkerkinematiken 8 und 29 zum hinteren Dachteil 5 und dessen Ausleger 34. In der Reihenfolge der Aufzählung liegen in Fahrtrichtung F aufeinander folgend im Überdeckungsbereich des hinteren Dachteiles 5 die Anlenkung 48 des Hauptlenkers 22, die Anlenkung 49 des Stellzylinders 21 und die Anlenkung 36 des Steuerlenkers 23. In Fahrtrichtung F nach vorne versetzt, insbesondere im Bereich des Auslegers 34, liegen des Weiteren die Anlenkung 37 des Pendellenkers 18, die Anlenkung 38 des Hauptlenkers 17 und die Anlenkung 39 des Steuerlenkers 16, wobei, bei geschlossenem Dach 1 und aneinander anschließenden Dachteilen 4 und 5, der dem Hauptlenker 17 zugeordnete Antriebsarm, der mit 32 bezeichnet ist, mit seinen Anlenkungen 38 zum Hauptlenker 17 und 40 zum Zwischenlenker 19 auf einer Geraden liegt, die unter einem kleinen Winkel nach hinten unten verläuft. Für den Zwischenlenker 19 ist, immer noch auf die geschlossene Lage des Daches 1 bezogen, bezüglich der durch seine Anlenkpunkte 40 zum Antriebsarm 32 und 41 zur Koppel 20 bestimmten Geraden eine Erstreckung im Wesentlichen in Längsrichtung des Daches, bei leichter Neigung nach hinten oben gegeben, und damit unter einem sehr flachen Winkel zur Koppel 20, die ihrerseits leicht nach hinten unten angestellt ist, so dass insgesamt gesehen bei geschlossenem Dach 1 der Zwischenlenker 19 und die Koppel 20 in Annäherung in Flucht liegend zueinander verlaufen. Die Anlenkung 42 der Koppel 20 am Steuerlenker 23 erfolgt in dessen auf die Anlenkung 43 zum Schenkel 28 der Rotationslenkeranordnung 24 auslaufenden Bereich, wobei der Schenkel 28 zur Erstreckung des Daches 3 im Wesentlichen parallel verläuft und der Hauptlenker 22 und der Steuerlenker 23 der ein Lenkerparallelogramm bildenden Lenkerkinematik 29 in Fahrtrichtung F unter einem spitzen Winkel von bevorzugt etwa zwischen 20 und 30° schräg nach vorne und oben verlaufen. Bezogen auf das geschlossene Dach 1 erstreckt sich der Pendellenker 18 von seiner dachseitigen Anlenkung 37 gegen den Stellzylinder 21 schräg nach hinten und unten, und damit entgegengesetzt zum Stellzylinder 21, dessen bevorzugt gemeinsame Anlenkung zum Pendellenker 18 und zur Koppel 20 mit 44 bezeichnet ist. Der Pendellenker 18 und der Stellzylinder 21 bilden die Schenkel eines Dreiecks, dessen durch die Anlenkungen 37 und 49 bestimmte Basis dachseitig vorgesehen ist und dessen Schenkel einen stumpfen Winkel von etwa 130° einschließen und sich im unterhalb des Daches 1 im durch die Anlenkung 44 gebildeten Scheitel schneiden.

Bezogen auf das geschlossene Dach 1 ergibt sich somit ein sehr flacher Aufbau, da auch die Lenker 16 und 17 der Lenkerkinematik 8 der Dachkontur nahezu folgend ausgerichtet sind. Für die Lenkerkinematik 7 und die in deren Antrieb liegende Fünfgelenkkinematik 9 sind im Wesentlichen gleiche Anordnungsverhältnisse gegeben wie für die Lenkerkinematik 8 und die Fünfgelenkkinematik 10. Abweichend ist insoweit lediglich die Anlenkung der Koppel 15 zum Steuerlenker 16 nahe dessen dachseitiger Anlenkung, wie aus Fig. 1 ersichtlich, was ebenfalls zu einem flachen Dachaufbau beiträgt.

Ein Dachkonzept für ein Steilheckfahrzeug mit offenem Aufbau sieht ein mehrstufiges zu öffnendes Dach 1 vor, dessen miteinander über Lenkerkinematiken 7, 8 verbundene und gegeneinander verstellbare Dachteile 3 bis 5 über eine einem Dachteil zugeordnete Lenkerkinematik 29 auf einer Tragbasis 35 abgestützt sind, wobei ein gemeinsamer Stellantrieb für die Verstellung der Dachteile 3 bis 5 zueinander und gegenüber der Tragbasis 35 vorgesehen ist und dieser gemeinsame Stellantrieb zwischen einer der Lenkerkinematiken und einer dachseitigen Abstützung vorgesehen ist.

## Patentansprüche

1. Dachkonzept für ein Fahrzeug mit offenem Aufbau und einem zu öffnenden Dach mit zumindest zwei Dachteilen, die bei geschlossenem Dach aneinander anschließen und bei geöffnetem Dach zu einem Dachteilpaket zusammengefahren sind, wobei die Dachteile miteinander verbunden sind, eines der miteinander verbundenen Dachteile mit einer Tragbasis verbunden ist, als Verbindungen der Dachteile zueinander und des einen Dachteiles zur Tragbasis jeweils eine Lenkerkinematik vorgesehen ist, die Lenkerkinematiken untereinander antriebsverbunden sind und wobei für die die Dachteile miteinander und mit der Tragbasis verbindenden und untereinander antriebsverbundenen Lenkerkinematiken ein gemeinsamer, an die antriebsverbundenen Lenkerkinematiken angekoppelter an einer Abstützung gehaltener Stellantrieb vorgesehen ist,
**dadurch gekennzeichnet,**
**dass** die Abstützung für den Stellantrieb (Stellzylinder 21) dachseitig vorgesehen ist.

2. Dachkonzept nach Anspruch 1,
**dadurch gekennzeichnet,**
**dass** die Abstützung für den Stellantrieb (Stellzylinder 21) an einem Dachteil (5) vorgesehen ist.

3. Dachkonzept nach Anspruch 1 oder 2,
**dadurch gekennzeichnet,**
**dass** der Stellantrieb als Linearantrieb ausgeführt, insbesondere durch einen Stellzylinder (21) gebildet ist.

4. Dachkonzept nach einem der Ansprüche 1 bis 3,
**dadurch gekennzeichnet,**
**dass** der Stellantrieb (Stellzylinder 21) an dem über eine Lenkerkinematik (29) mit der Tragbasis (35) verbundenen Dachteil (5) abgestützt ist.

5. Dachkonzept nach einem der Ansprüche 1 bis 4,
**dadurch gekennzeichnet,**
**dass** der Stellantrieb (Stellzylinder 21) seitens der Lenkerkinematiken (8, 29) an eine Koppel (20) angekuppelt ist, die als Antriebsverbindung zwischen zwei aufeinander folgenden Dachteilen (4, 5) zugeordneten Lenkerkinematiken (29, 8) vorgesehen ist.

6. Dachkonzept nach einem der Ansprüche 1 bis 5,
**dadurch gekennzeichnet,**
**dass** das mit der Tragbasis (35) über eine Lenkerkinematik (29) verbundene Dachteil das hintere Dachteil (5) bildet.

7. Dachkonzept nach einem der vorhergehenden Ansprüche,
**dadurch gekennzeichnet,**
**dass** die mit der Tragbasis (35) verbundene Lenkerkinematik (29) als Viergelenkkinematik ausgebildet ist.

8. Dachkonzept nach einem der vorhergehenden Ansprüche,
**dadurch gekennzeichnet,**
**dass** das eine, über eine Lenkerkinematik (29) an dem mit der Tragbasis (35) verbundene Dachteil (5) angelenkte Dachteil (4) ein vorderes Dachteil bildet, und dass die das vordere mit dem hinteren, über eine Viergelenkkinematik (29) mit der Tragbasis (35) verbundenem Dachteil (5) verbindende Lenkerkinematik (8) als Viergelenkkinematik ausgebildet ist.

9. Dachkonzept nach einem der vorhergehenden Ansprüche,
**dadurch gekennzeichnet,**
**dass** die Antriebsverbindung zwischen den aufeinander folgenden Viergelenkkinematiken auslaufend auf die jeweils angetriebene Viergelenkkinematik eine Fünfgelenkkinematik (9 bzw. 10) umfasst.

10. Dachkonzept nach Anspruch 9,
**dadurch gekennzeichnet,**
**dass** die in der Antriebsverbindung zwischen aufeinander folgenden Viergelenkkinematiken liegende Koppel (15; 20) über einen Pendellenker (13; 18) der Fünfgelenkkinematik (9, 10) geführt ist.

11. Dachkonzept nach Anspruch 9 oder 10,
**dadurch gekennzeichnet,**
**dass** die Fünfgelenkkinematik (10) angelenkt an die Koppel (20) einen Zwischenlenker (19) aufweist, der an einem Antriebsarm (32) eines Lenkers (17) der das vordere Dachteil (4) tragenden Viergelenkkinematik angelenkt ist.

12. Dachkonzept nach einem der Ansprüche 9 bis 11,
**dadurch gekennzeichnet,**
**dass** dem hinteren Dachteil (5) die Anlenkungen der zum anschließenden vorderen Dachteil (4) sowie zur Tragbasis (35) führenden Lenkerkinematiken (8; 24), des Pendellenkers (18) und des Stellzylinders (21) zugeordnet sind.

13. Dachkonzept nach Anspruch 12, **dadurch gekennzeichnet,**
**dass** von den dem hinteren Dachteil (5) zugeordneten Anlenkungen 36, 37, 38, 39, 48, 49) die Anlenkungen (38, 39) für die zum vorderen Dachteil (4) führende Lenkerkinematik (8) und für den Pendellenker (18) im Bereich eines nach vorne auskragenden Auslegers (34) des hinteren Dachteiles (5) vorgesehen sind.

14. Dachkonzept nach Anspruch 12 oder 13,
**dadurch gekennzeichnet,**
**dass** am hinteren Dachteil (5), in Überdeckung zu diesem, die Anlenkungen (36, 48, 49) der zur Tragbasis (35) führenden Viergelenkkinematik und des Stellzylinders (21) vorgesehen sind.

15. Dachkonzept nach Anspruch 14,
**dadurch gekennzeichnet,**
**dass** die Anlenkung (49) des Stellzylinders (21) am hinteren Dachteil (5) zwischen den Anlenkungen (36, 48) der zur Tragbasis (35) führenden Viergelenkkinematik liegen.

16. Dachkonzept nach einem der Ansprüche 10 bis 15,
**dadurch gekennzeichnet,**
**dass** bei geschlossenem Dach (1) die Koppel (15, 20) und der Zwischenlenker (14, 19) bei im Wesentlichen gleicher Erstreckung in Längsrichtung des Daches (1) ausgerichtet sind.

17. Dachkonzept nach einem der Ansprüche 10 bis 16,
**dadurch gekennzeichnet,**
**dass** bei geschlossenem Dach (1) der Pendellenker (18) und der Stellzylinder (21) unter einem stumpfen, gegen das hintere Dachteil (5) sich öffnenden Winkel zueinander stehen.

18. Dachkonzept nach einem der vorhergehenden Ansprüche,
**dadurch gekennzeichnet,**
**dass** das Dach (1) dreiteilig ausgebildet ist und das vorderste Dachteil (3) mit dem vorderen Dachteil (4), entsprechend dem vorderen Dachteil (4) zum hinteren Dachteil (5), über eine Viergelenkkinematik (Lenkerkinematik 7) verbunden und über eine Koppel (15) zur Viergelenkkinematik (Lenkerkinematik) des vorderen Dachteiles (4) antriebsverbunden ist.

19. Dachkonzept nach Anspruch 18,
**dadurch gekennzeichnet,**
**dass** die Antriebsverbindung eine Fünfgelenkkinematik (9) umfasst.

20. Dachkonzept nach einem der vorhergehenden Ansprüche,
**dadurch gekennzeichnet,**
**dass** die Tragbasis (35) durch eine Rotationslenkeranordnung (24) gebildet ist, über die das Dachteilpaket (31) in eine Überkopflage verschwenkbar im Bodenbereich des Fahrzeuges abzulegen ist.

21. Dachkonzept nach einem der vorhergehenden Ansprüche,
**dadurch gekennzeichnet,**
**dass** das Fahrzeug als Steilheckfahrzeug ausgebildet ist und das Dach (1) in seiner Schließlage die Überdeckung zu einem Dachausschnitt bildet, der in einen heckseitigen Ausschnitt des Fahrzeuges übergeht, dem eine heckseitige Abdeckung (2) zugeordnet ist, die den Dachausschnitt nach hinten abgrenzt.
